# EUROPEAN PATENT SPECIFICATION

(11) **EP 2 713 504 B1**
(45) Date of publication and mention of the grant of the patent: **27.11.2024**
(21) Application number: 13185703.9
(22) Date of filing: 24.09.2013
(51) Int. Cl.: H02P 29/02, H02H 3/087, H02H 7/08

(54) **Overcurrent protection device and power tool**
Überstromschutzvorrichtung und Elektrowerkzeug
Dispositif de protection contre les surintensités et outil électrique

(30) Priority: 28.09.2012 JP 2012217789
(43) Date of publication of application: 02.04.2014
(73) Proprietor: Panasonic Intellectual Property Management Co., Ltd., Osaka-shi, Osaka 540-6207 (JP)
(72) Inventor: Muto, Motoharu, Chuo-ku, Osaka 540-6207 (JP); Miwa, Tatsuya, Chuo-ku, Osaka 540-6207 (JP); Ikeda, Masaki, Chuo-ku, Osaka 540-6207 (JP)
(74) Representative: Appelt, Christian W.

(56) References cited:
- JP-A- 2002 095 151
- JP-A- 2005 304 145
- JP-A- 2011 244 518
- JP-A- H05 267 580
- US-A1- 2009 115 364
- US-A1- 2012 176 115

## Description

The present invention relates to a power tool that includes an overcurrent protection circuit that protects a driving subject such as a motor from overcurrent (overload).

A power tool includes a motor serving as a drive source, a switching element, and a control circuit. The control circuit controls the switching operation of the switching element to regulate the drive current supplied to the motor. When such a power tool is continuously used under harsh conditions, overcurrent may flow to the motor or the switching element and overheat the motor or the switching element. Overheating of the motor or the switching element may generate odorous fumes or cause damages.

JP 2002-095151 A addresses the problem of how to prevent breakdown due to overcurrent or overvoltage, and enable safe transition to the off-state, when an overcurrent flows in an IGBT. As solution, it is suggested: When a state of overcurent is generated, a gate voltage of the IGBT is decreased quickly as far as a set value by a gate current increasing means, and switching operation is started quickly. After that, the gate voltage holds the set value, and gentle switching is realized.

JP 2011-244518 A addresses the problem of how to solve the following problem: there is the possibility of impossible discharge control of a capacitor when a vehicle has a collision. As solution, it is suggested: A series regulator steps down a voltage of a capacitor and outputs the stepped-down voltage to a drive unit DU of a U-phase lower arm. A flyback converter FBd for discharge control outputs electric power to a drive unit DU of a U-phase upper arm with the output of the series regulator as an input. When a collision is detected, a photocoupler is turned off, so that the series regulator is turned on to start discharge control. At this time, power supply to overcurrent protection means and overheat protection means of the drive unit DU is prohibited.

Japanese Laid-Open Patent Publication No. 11-98681 describes a control circuit that monitors the drive current flowing to a motor. When the drive current becomes an overcurrent that exceeds a tolerable level, the control circuit s the generation (supply) of drive current for the motor.

The control circuit of the '681 publication is formed by a microcomputer that includes a CPU. A differential amplifier connects the control circuit to a current detection resistor, which generates a voltage signal (inter-terminal voltage) having a level corresponding to the drive current for the motor. The control circuit is provided with the voltage signal via the differential amplifier. The control circuit performs A/D conversion on the voltage signal. The control circuit also performs various computations with the CPU. Then, the control circuit determines whether or not overcurrent is flowing. When the control circuit determines that overcurrent is flowing, the control circuit outputs a command for stopping the generation of the drive current (deactivation command for output prohibition switch). In this manner, in the control circuit of the '681 publication, there is a time lag between when the overcurrent starts to flow and when the generation of the drive current for the motor is actually stopped. The time lag includes the computation time and the time for a series of operations. The time lag is a relatively short period of time. Nevertheless, overcurrent may flow to the motor and/or the switching element. For example, when a power tool is repetitively operated under harsh conditions, heat accumulates in the motor and the switching element. This may generate odorous fumes or cause damages.

It is an object of the present invention to provide a power tool that protects a driving subject by restricting the generation of the drive current supplied to the driving subject as soon as the drive current becomes an overcurrent.

The present invention relates to a power tool as defined by independent claim 1. Some of the preferred embodiments are described in the dependent claims, in the description and in the figures.

Other aspects and advantages of the present invention will become apparent from the following description, taken in conjunction with the accompanying drawings, illustrating by way of example the principles of the invention.

The novel features which are considered characteristic of the invention are set forth with particularity in the appended claims. The invention itself and additional objects and advantages thereof will best be understood from the following description of embodiments thereof when read in connection with the accompanying drawings, in which:
Fig. 1 is an electric circuit diagram of one embodiment of a power tool according to the invention;
Fig. 2 is a flowchart illustrating the processing of drive current control according to the invention;
Fig. 3 is a timing chart illustrating the operation of a drive controller according to the invention;
Fig. 4 is a timing chart illustrating the operation of another embodiment of the drive controller according to the invention; and

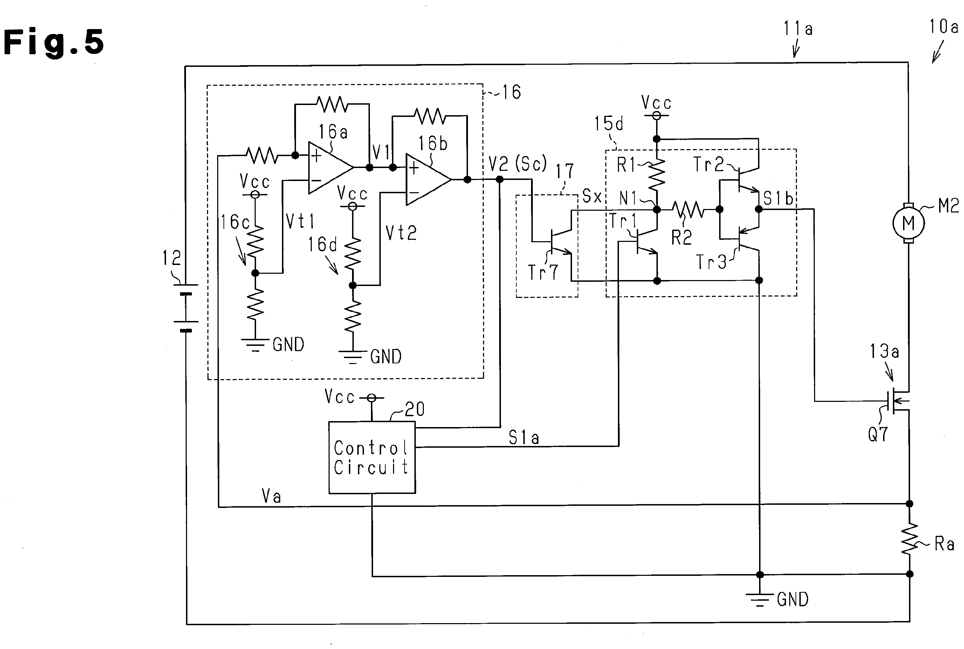

Fig. 5 is an electric circuit diagram of a further embodiment of a power tool according to the invention.

A power tool according to one embodiment of the present invention will now be described.

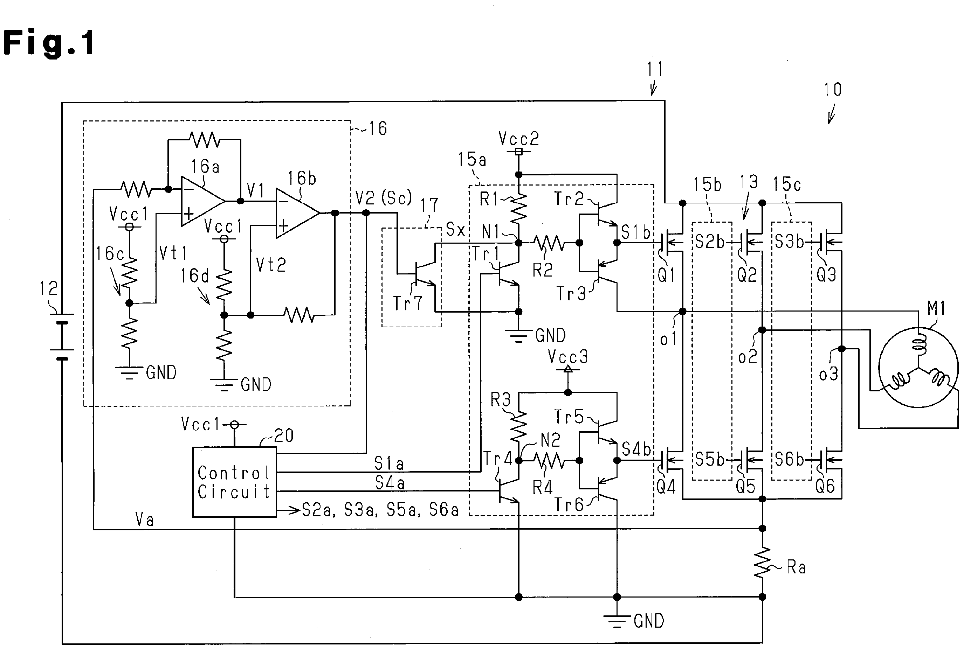

Referring to Fig. 1, a power tool 10 includes a motor M1, which serves as a drive source, and a drive controller 11, which controls and drives the motor M1. The motor M1 may be a brushless motor including three phase coils. The drive controller 11, which is connected to a battery pack 12, generates drive current and supplies the motor M1 with the drive current.

The drive controller 11 includes a three-phase full-bridge drive circuit 13. The drive circuit 13 includes semiconductor switching elements Q1 to Q6. The switching elements Q1, Q2, and Q3 may be referred to as the upper arms, and the switching elements Q4, Q5, and Q6 may be referred to as the lower arms. A first output terminal o1 between the switching elements Q1 and Q4, a second output terminal o2 between the switching elements Q2 and Q5, and a third output terminal o3 between the switching elements Q3 and Q6 are connected to corresponding phase coils of the motor M1. The drive circuit 13 includes a positive terminal, which is connected to the positive terminal of the battery pack 12, and a negative terminal, which is connected to the negative terminal of the battery pack 12 via a current detection resistor Ra that detects the drive current for the motor M1.

The two switching elements Q1 and Q4 each include a control terminal connected to a first switching drive unit 15a. The two switching elements Q2 and Q5 each include a control terminal connected to a second switching drive unit 15b. The two switching elements Q3 and Q6 each include a control terminal connected to a third switching drive unit 15c. The switching drive units 15a to 15c are operated and controlled by control signals S1a to S6a from a control circuit 20 and a switching signal Sx from a drive current reduction switch 17. Since the first to third switching drive units 15a to 15c have the same configurations, only the first switching drive unit 15a is illustrated in detail in Fig. 1.

The first switching drive unit 15a includes transistors Tr1 to Tr3, which are associated with the upper arm (switching element Q1), and transistors Tr4 to Tr6, which are associated with the lower arm (switching element Q4). In the illustrated example, the transistors Tr1, Tr2, Tr4, and Tr5 are NPN transistors, and the transistors Tr3 and Tr6 are PNP transistors.

The transistors Tr1 to Tr3 of the first switching drive unit 15a will now be described. The transistor Tr1 includes a control terminal provided with a control signal S1a from the control circuit 20, a collector connected to an internal power supply Vcc2 via a resistor R1, and an emitter connected to ground GND. The emitters of the transistors Tr2 and Tr3 are connected to each other. The collector of the transistor Tr2 is connected to the internal power supply Vcc2. The collector of the transistor Tr3 is connected to the output terminal o1 between the switching elements Q1 and Q4. The control terminals of the transistors Tr2 and Tr3 are connected to each other. Further, the control terminals of the transistors Tr2 and Tr3 are connected via a resistor R2 to a node N1 between the resistor R1 and the collector of the transistor Tr1. The transistors Tr1 to Tr3 and the resistors R1 and R2 may be referred to as the upper arm switching drive unit.

The transistors Tr4 to Tr6 of the first switching drive unit 15a are configured in substantially the same manner as the transistors Tr1 to Tr3. The transistor Tr4 includes a control terminal provided with a control signal S4a from the control circuit 20, a collector connected to an internal power supply Vcc3 via a resistor R3, and an emitter connected to ground GND. The emitters of the transistors Tr5 and Tr6 are connected to each other. The collector of the transistor Tr5 is connected to the internal power supply Vcc3. The collector of the transistor Tr6 is connected to ground GND. The control terminals of the transistors Tr5 and Tr6 are connected to each other. Further, the control terminals of the transistors Tr5 and Tr6 are connected via a resistor R4 to a node N2 between the resistor R3 and the collector of the transistor Tr4. The transistors Tr4 to Tr6 and the resistors R3 and R4 may be referred to as the upper arm switching drive unit.

The second and third switching drive units 15b and 15c are configured in the same manner as the first switching drive unit 15a. The second switching drive unit 15b is connected to the switching elements Q2 and Q5 and receives the control signals S2a and S5a from the control circuit 20. The third switching drive unit 15c is connected to the switching elements Q3 and Q6 and receives the control signals S3a and S6a from the control circuit 20.

The control circuit 20 is powered by the internal power supply Vcc1 and performs various computations for the power tool 10 (motor M1). The control circuit 20 may be a microcomputer that includes a CPU. The battery pack 12 and an internal power generator (not shown) generate the power for each of the internal power supplies Vcc1, Vcc2, and Vcc3. In the illustrated example, the internal power supply Vcc1 is used to operate the control circuit 20 and to generate reference voltages Vt1 and Vt2 for an overcurrent determination unit 16. The internal power supplies Vcc2 and Vcc3 supply power to the switching drive units 15a to 15c.

To drive the motor M1, the control circuit 20 generates control signals S1a to S6a, which are pulsed and have pulse widths suitable for the present situation. The control circuit 20 than provides the switching elements Q1 to Q6 of the first to third switching drive units 15a to 15c with the control signals S1a to S6a at a controlled timing. The control signals S1a, S2a, and S3a may be referred to as upper arm control signals. The controls signals S4a, S5a, and S6a may be referred to as lower arm control signals. In response to the upper arm control signal S1a, the first switching drive unit 15a (in particular, the upper arm switching drive unit) provides the switching element Q1 of the drive circuit 13 with a control signal S1b having an inverted logic. In the same manner, when receiving the lower arm control signal S4a, the first switching drive unit 15a (in particular, the lower arm switching drive unit) provides the switching element Q4 of the drive circuit 13 with a control signal S4b having an inverted logic. Further, in the same manner, the second and third switching drive units 15b and 15c provide the switching elements Q2, Q3, Q5, and Q6 of the drive circuit 13 with control signals S2b, S3b, S5b, and S6b in response to the control signals S2a, S3a, S5a, and S6a.

The switching elements Q1 to Q6 of the drive circuit 13 are repetitively activated and deactivated at a timing controlled in accordance with control signals S1b to S6b from the switching drive units 15a to 15c. This generates the drive current that rotates the motor M1. The control circuit 20 stops driving the motor M1 by generating each of the control signals S1a to S6a with, for example, a low level and deactivating the switching elements Q1 to Q6 of the drive circuit 13. In this case, the switching elements Q1 to Q6 are deactivated in response to the low level control signals S1b to S6b from the switching drive units 15a to 15c. This stops the generation and supply of the drive current for the motor M1. The drive circuit 13 and the switching drive units 15a to 15c form one example of a drive current generation unit.

The overcurrent determination unit 16 includes an operational amplifier 16a and a comparator 16b. The negative terminal of the operational amplifier 16a is supplied with a detection voltage Va of the current detection resistor Ra that is in accordance with the amount of the drive current for the motor M1. The positive terminal of the operational amplifier 16a is supplied with a reference voltage Vt1 from a voltage dividing circuit 16c. The negative terminal of the comparator 16b is supplied with an output voltage V1 of the operational amplifier 16a. The positive terminal of the comparator 16b is provided with a reference voltage Vt2 from a voltage-dividing circuit 16d. An output voltage V2 of the comparator 16b is supplied to the control circuit 20 and the drive current reduction switch 17. The output voltage V2 of the comparator 16b may be referred to as the determination signal Sc of the overcurrent determination unit 16. The reference voltage Vt2 corresponds to a tolerable value of the drive current.

In the overcurrent determination unit 16, the operational amplifier 16a amplifies the detection voltage Va, and the comparator 16b compares the output voltage V1, which corresponds to the amplified detection voltage Va, with the reference voltage Vt2. For example, when the drive current for the motor M1 is lower than the tolerable value of, that is, when the output voltage V1 of the operational amplifier 16a (inverted output) in the preceding stage is higher than the reference voltage Vt2, the comparator 16b outputs the determination signal Sc with a low level. When the drive current for the motor M1 is higher than the tolerable value, that is, when the output voltage V1 of the operational amplifier 16a (inverted output) in the preceding stage is lower than the reference voltage Vt2, the comparator 16b outputs the determination signal Sc with a high level. In this manner, the determination signal Sc of the overcurrent determination unit 16 (output voltage V2) determines whether or not the drive current of the motor M1 has exceeded the tolerable value.

When the determination signal Sc provided from the comparator 16b has a low level, the control circuit 20 determines that the drive current of the motor M1 is lower than the tolerable value. In this case, the control circuit 20 continues to output the control signals S1a to S6a to the switching drive units 15a to 15c (control signals S1b to S6b to the drive circuit 13).

Alternatively, when the determination signal Sc provided from the comparator 16b has a high level, the control circuit 20 determines that the drive current of the motor M1 is higher than the tolerable value. In this case, the control circuit 20 maintains the controls signals S1a to S6a provided to the switching drive units 15a to 15c at a low level to stop the generation of the drive current for the motor M1. As a result, the control signals S1b to S6b output to the drive circuit 13 are maintained at a low level, and the switching elements Q1 to Q6 of the drive circuit 13 are deactivated. This stops the generation of the drive current for the motor M1, and the drive current stops flowing to the switching elements Q1 to Q6.

A circuit configuration that shortens the response time from when the drive current for the motor M1 becomes an overcurrent to when the generation of the drive current for the motor M1 is stopped will now be described.

The overcurrent protection device of the present embodiment includes the drive current reduction switch 17 so that the response time does not become long due to computations by the control circuit 20. The drive current reduction switch 17 is directly connected to the switching drive units 15a to 15c without involving the control circuit 20, that is, by bypassing the control circuit 20, to deactivate the switching elements Q1 to Q6 of the drive circuit 13. The drive current reduction switch 17 is connected to the overcurrent determination unit 16 to directly receive the determination signal Sc, which is the output of the comparator 16b of the overcurrent determination unit 16. Further, the drive current reduction switch 17 is arranged in a bypass line that connects the overcurrent determination unit 16 and the switching drive unit 15a. The control circuit 20 is excluded from the bypass line.

In the example shown in Fig. 1, the drive current reduction switch 17 includes an NPN transistor Tr7. The control terminal (base) of the transistor Tr7 receives the determination signal Sc from the comparator 16b. The transistor Tr7 is connected in parallel to the transistor Tr1 in the first switching drive unit 15a. More specifically, the collector of the transistor Tr7 is connected to the node N1 between the resistor R1 and the transistor Tr1, and the emitter of the transistor Tr7 is connected to the output terminal o1 between the switching elements Q1 and Q4 of the drive circuit 13. A single drive current reduction switch 17, which is a transistor Tr7, is shared by the first to third switching drive units 15a to 15c. The drive current reduction switch 17 may have a circuit configuration that does not perform a computation.

When the drive current for the motor M1 is lower than the tolerable value, that is, when the determination signal Sc of the overcurrent determination unit 16 (comparator 16b) has a low level, the transistor Tr7 of the drive current reduction switch 17 is deactivated. Accordingly, the potentials at the nodes N1 and N2 of the switching drive units 15a to 15c vary in accordance with the control signals S1a to S6a from the control circuit 20 and generate the pulsed control signals S1b to S6b that operate the switching elements Q1 to Q6 of the drive circuit 13.

In contrast, when the drive current for the motor M1 is an overcurrent, that is, when the determination signal Sc of the overcurrent determination unit 16 (comparator 16b) has a high level, the transistor Tr7 is activated, and the potential at the node N1 of the switching drive units 15a to 15c is maintained at a low level (switching signal Sx has a low level). Accordingly, even when the transistor Tr1 is activated and deactivated in accordance with the control signals S1a to S6a from the control circuit 20, the transistor Tr2 in the following stage is maintained in a deactivated state and the transistor Tr3 is maintained in an activated state. As a result, the control signals S1b to S3b for the switching elements Q1 to Q3 of the drive circuit 13 are maintained at a low level, and the upper arm switching elements Q1 to Q3 of the drive circuit 13 are maintained in a deactivated state. This process does not include the computations of the control circuit 20 and thus stops the generation of the drive current for the motor M1 within a shorter period of time. Thus, overcurrent is readily cancelled.

The drive controller 11 is one example of an overcurrent protection device. The circuit that includes the overcurrent determination unit 16, the drive current reduction switch 17, the control circuit 20, and the current detection resistor Ra is one example of an overcurrent protection circuit.

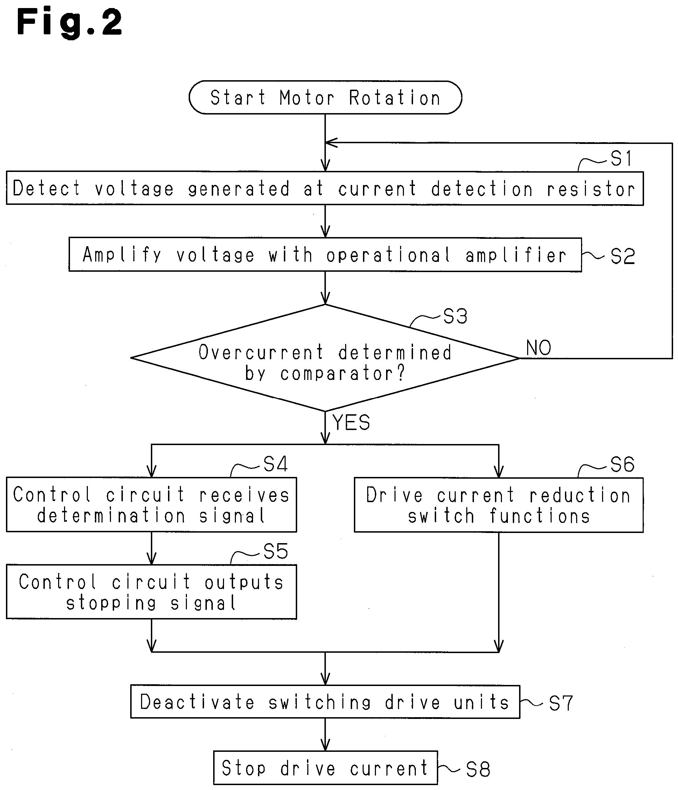

The operation of the drive controller 11 will now be described with reference to Fig. 2.

Based on a rotation start command for the motor M1, the switching elements Q1 to Q6 function under the control of the control circuit 20 to generate the drive current for the motor M1. As a result, the drive current flows to the current detection resistor Ra, and voltage corresponding to the drive current is generated at the current detection resistor Ra (step S1). Then, the operational amplifier 16a of the overcurrent determination unit 16 amplifies the voltage generated at the current detection resistor Ra, namely, the detection voltage Va (step S2).

The comparator 16b then compares the output voltage V1 of the operational amplifier 16a with the reference voltage Vt2 (step S3). As long as the comparison indicates that the drive current for the motor M1 is lower than the tolerable value, the determination signal Sc of the overcurrent determination unit 16 (comparator 16b) remains at the low level, and the drive current is continuously generated.

When the comparison of the output voltage V1 and the reference voltage Vt2 indicates that the drive current for the motor M1 has exceeded the tolerable value, the determination signal Sc of the overcurrent determination unit 16 (comparator 16b) is shifted to a high level from the low level. Subsequently, the control circuit 20 receives the high level determination signal Sc (step S4), and the control circuit 20 starts outputting a signal for stopping the generation of the drive current (step S5). In parallel to step S5, the drive current reduction switch 17 directly receives the high level determination signal Sc from the overcurrent determination unit 16 and functions immediately (step S6).

Before completion of the relatively slow process of the control circuit 20 for stopping the generation of the drive current, the drive current reduction switch 17 directly stops, without involving the control circuit 20, the generation of the drive current at a relatively early timing. Then, the switching drive units 15a to 15c are deactivated (step S7). The switching elements Q1 to Q3 of the drive circuit 13 are maintained in a deactivated state, and the generation of the drive current for the motor M1 is stopped (step S8).

The operation of the drive current reduction switch 17 in the present embodiment will now be discussed.

When the determination signal Sc of the comparator 16b shifts to an H level and indicates that the drive current of the motor M1 is an overcurrent, the control circuit 20 outputs the control signals S1a to S6a to deactivate the switching elements Q1 to Q6. Since the control circuit 20 performs various computations, a slight period of time is used before the control circuit 20 outputs the control signals S1a to S6a for deactivating the switching elements Q1 to Q6 of the drive circuit 13 and stops the generation (supply) of the drive current for the motor M1.

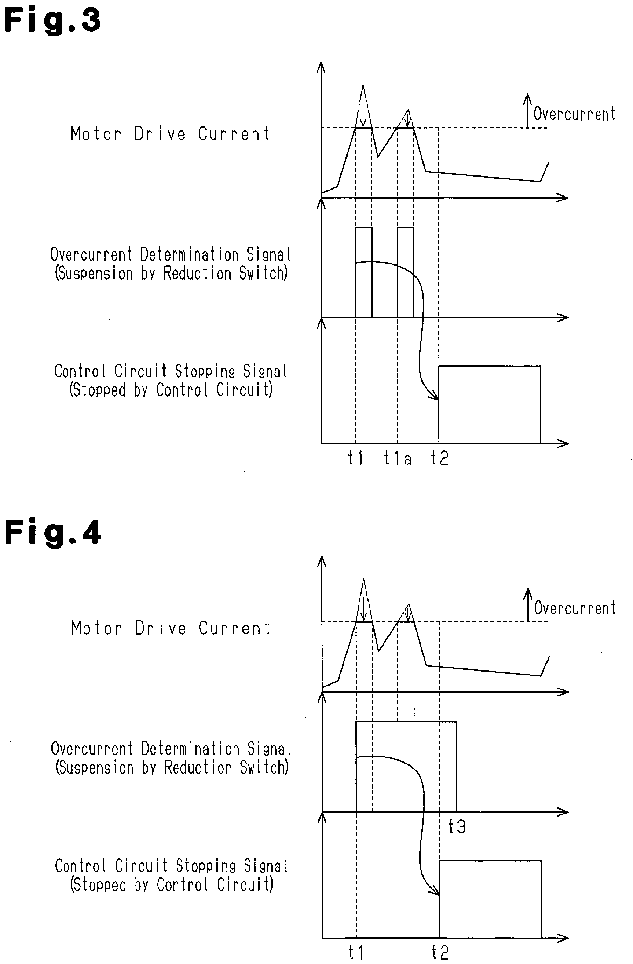

More specifically, as shown in Fig. 3, a certain period of time elapses between time t1, which is when the determination signal Sc of the comparator 16b shifts to a high level, and time t2, which is when the control circuit 20 outputs a stop signal. When stopping the generation of the drive current with only the control circuit 20, the drive current flowing to the motor M1 may be an overcurrent (indicated by broken lines in Fig. 3) until time t2.

However, in the present embodiment, until the control circuit 20 outputs the stop signal at time t2, the drive current reduction switch 17 readily functions upon receipt of a high level determination signal Sc from the comparator 16b at time t1 or time t1a. This immediately suspends the generation of the overcurrent in the drive current for the motor M1 (portion indicated by broken lines is reduced to portion indicated by solid lines in Fig. 3). Thus, protection from overcurrent is further ensured for the motor M1 and the switching elements Q1 to Q6 of the drive circuit 13. The control circuit 20 continuously stops the generation of the drive current for a predetermined period from time t2.

The advantages of the present embodiment will now be described.
(1) The drive current reduction switch 17 in the drive controller 11 receives the determination signal Sc from the overcurrent determination unit 16 without involving the control circuit 20. In response to a determination signal Sc indicating that the drive current for the motor M1 is overcurrent, the drive current reduction switch 17 directly switches the drive current generation unit (i.e., switching drive units 15a to 15c and drive circuit 13) to a reduced drive current generation state (or suspension state). Without relying on the computations of the control circuit 20, the drive current reduction switch 17 directly receives the detection signal Sc that indicates the generation of an overcurrent. As a result, the response time is reduced from when the drive current for the motor M1 becomes an overcurrent to when the generation of the drive current for the motor M1 is stopped. Further, the motor M1 and the switching elements Q1 to Q6 of the drive circuit 13 are protected from overcurrent. This obviates the generation of odorous fumes and damage to the power tool 10. The drive controller 11 is suitable for the power tool 10 that is repetitively operated under harsh conditions.
(2) The drive current reduction switch 17 shifts the drive current generation unit to a drive current generation suspension state. Accordingly, overcurrent is immediately cancelled immediately after the drive current generation unit is deactivated.
(3) The upper arm switching elements Q1 to Q3 of the full-bridge drive circuit 13 is the subject that the drive current reduction switch 17 performs the process for reducing the generated drive current. This allows for a simplified configuration as compared to when the upper and lower arms are both subject to this process.

It should be apparent to those skilled in the art that the present invention may be embodied in many other specific forms without departing from the spirit or scope of the invention. Particularly, it should be understood that the present invention may be embodied in the following forms.

The comparator 16b of the above embodiment outputs the determination signal Sc that shifts to a high level when overcurrent is generated as shown in Fig. 3, and the drive current reduction switch 17 is deactivated when overcurrent is generated. Instead, referring to Fig. 4, the comparator 16b may be provided with hysteresis characteristics, and the determination signal Sc may be kept at a high level from time t1, which is when overcurrent is generated, to time t3, which is after the control circuit 20 stops the generation of the drive current. This allows for the operation resulting from the deactivation of the drive current reduction switch 17 to be continuous with the control executed by the control circuit 20 to stop the generation of the drive current. As a result, protection from overcurrent is further ensured for the motor M1 and the switching elements Q1 to Q6.

In the power tool 10 of the above embodiment, the motor M1 is a brushless motor, and the drive circuit 13 is configured by a full-bridge drive circuit. Instead, as shown in Fig. 4, a motor M2 may be a brush motor, and a drive circuit 13a may be configured by a chopper circuit of a semiconductor switching element Q7 that is series-connected to the motor M2 in a drive controller 11a. In this case, a switching drive unit 15d, which is configured to connect its upper arm portion to ground, activates and deactivates the switching element Q7, and the switching element Q7 is used by the drive current reduction switch 17 as the subject for momentarily stopping the generation of the drive current.

The generation of the drive current is momentarily stopped when overcurrent is generated. However, the duty ratio of the switching elements Q1 to Q3 and Q6 that are momentarily deactivated may be reduced to gradually decrease current and suppress overcurrent.

The driving subject is not limited to the motors M1 and M2 and may be elements other than the motors M1 and M2.

The present examples and embodiments are to be considered as illustrative and not restrictive, and the invention is not to be limited to the details given herein, but may be modified within the scope of the appended claims.

## Claims

1. A power tool (10), comprising:
a motor (M) serving as driving subject (M1); and
an overcurrent protection device (11) for protecting the driving subject (M1) from overcurrent, the overcurrent protection device (11) comprising:
a drive current generation unit (13, 15) that is configured to generate a drive current for the driving subject (M1);
a current detector (Ra) arranged to detect the drive current for the driving subject (M1);
an overcurrent determination unit (16) that is configured to determine whether or not the drive current detected by the current detector (Ra) is an overcurrent and outputs a determination signal (Sc) in accordance with the determination; and
a control circuit (20) that is configured to perform a computation including a control for switching the drive current generation unit (13, 15) between a drive current generation state and a drive current suspension state based on the determination signal (Sc) from the overcurrent determination unit (16), wherein the drive current generation unit (13, 15) is configured to generate the drive current in the drive current generation state, and the drive current generation unit (13, 15) is configured to stop generating the drive current in the drive current suspension state; **characterized in that** the power tool further comprises:
a single reduction switch (17) which is a transistor (Tr7), wherein the transistor (tr7) includes a base, connected to the overcurrent determination unit (16) to receive the determination signal (Sc), and a collector, connected to the drive generation unit (13, 15) to output a switching signal (Sx), and wherein the transistor (Tr7) is configured to receive the determination signal (Sc) from the overcurrent determination unit (16) without involving the control circuit (20) and to directly switch the drive current generation unit (13, 15) to a reduced drive current generation state when the determination signal (Sc) indicates that the drive current is an overcurrent.

2. The power tool (10) according to claim 1, being **characterized in that** the reduction switch (17) is configured to switch the drive current generation unit (13, 15) to the drive current suspension state when the determination signal (Sc) indicates that the drive current is an overcurrent.

3. The power tool (10) according to claim 1, being **characterized in that**:
the reduction switch (17) is configured to switch the drive current generation unit (13, 15) to the reduced drive current generation state when the determination signal (Sc) indicates that the drive current is an overcurrent; and
the reduction switch (17) is configured to maintain the drive current generation unit (13, 15) in the reduced drive current generation state at least until the control circuit (20) outputs a control signal for switching the drive current generation unit (13, 15) to the drive current suspension state.

4. The power tool (10) according to any one of the preceding claims, being **characterized in that**:
the reduction switch (17) is arranged in a bypass line that connects the overcurrent determination unit (16) and the drive current generation unit (13, 15), wherein the control circuit (20) is excluded from the bypass line.

5. The power tool (10) according to any one of the preceding claims, being **characterized in that**:
the reduction switch (17) is used with the drive current generation unit (13, 15) that includes a full-bridge drive circuit (13) formed by a plurality of switching elements (Q1 to Q6); and
the reduction switch (17) is associated with a switching element (Q1, Q2, Q3) for a single arm of the full-bridge drive circuit.

6. The power tool (10) according to any one of the preceding claims, being **characterized in that**:
the control circuit (20) includes a microcomputer (20).

7. The power tool (10) of claim 1,
wherein the overcurrent determination unit (16) is connected to the current detector (Ra), wherein the control circuit (20) is configured to generate a control signal for the switching and to provide the control signal to the drive current generation unit (13, 15), wherein the reduction switch (17) is connected to the overcurrent determination unit (16) and the drive current generation unit (13, 15), and wherein the reduction switch (17) is configured to directly provide the drive current generation unit (13, 15) with a switch signal (Sx) when the determination signal (Sc) indicates that the drive current is an overcurrent, and the switch signal (Sx) reduces the drive current that is generated by the drive current generation unit (13, 15).

## Patentansprüche

1. Elektrowerkzeug (10), aufweisend:
einen Motor (M), der als Antriebselement (M1) dient; und
eine Überstromschutzvorrichtung (11) zum Schutz des Antriebselements (M1) vor Überstrom, wobei die Überstromschutzvorrichtung (11) aufweist:
eine Antriebsstrom-Erzeugungseinheit (13, 15), die konfiguriert ist, um einen Antriebsstrom für das Antriebselement (M1) zu erzeugen;
einen Stromdetektor (Ra), der dafür eingerichtet ist, um den Antriebsstrom für das Antriebselement (M1) zu erfassen;
eine Überstrom-Bestimmungseinheit (16), die konfiguriert ist, um zu bestimmen, ob der von dem Stromdetektor (Ra) erfasste Antriebsstrom ein Überstrom ist oder nicht, und in Übereinstimmung mit der Bestimmung ein Bestimmungssignal (Sc) auszugeben; und
eine Steuerschaltung (20), die konfiguriert ist, um eine Berechnung durchzuführen, die eine Steuerung zum Umschalten der Antriebsstrom-Erzeugungseinheit (13, 15) zwischen einem Antriebsstrom-Erzeugungszustand und einem Antriebsstrom-Unterbrechungszustand auf der Grundlage des Bestimmungssignals (Sc) von der Überstrom-Bestimmungseinheit (16) umfasst, wobei die Antriebsstrom-Erzeugungseinheit (13, 15) konfiguriert ist, um den Antriebsstrom in dem Antriebsstrom-Erzeugungszustand zu erzeugen, und die Antriebsstrom-Erzeugungseinheit (13, 15) konfiguriert ist, um die Erzeugung des Antriebsstroms in dem Antriebsstrom-Unterbrechungszustand zu stoppen; **dadurch gekennzeichnet, dass** das Elektrowerkzeug ferner aufweist:
einen einzelnen Reduktionsschalter (17), der ein Transistor (Tr7) ist, wobei der Transistor (Tr7) eine Basis, die mit der Überstrom-Bestimmungseinheit (16) verbunden ist, um das Bestimmungssignal (Sc) zu empfangen, und einen Kollektor, der mit der Antriebsstrom-Erzeugungseinheit (13, 15) verbunden ist, um ein Schaltsignal (Sx) auszugeben, aufweist, und wobei der Transistor (Tr7) konfiguriert ist, um das Bestimmungssignal (Sc) von der Überstrom-Bestimmungseinheit (16) ohne die Steuerschaltung (20) einzubeziehen, zu empfangen und die Antriebsstrom-Erzeugungseinheit (13, 15) direkt in einen reduzierten Antriebsstrom-Erzeugungszustand zu schalten, wenn das Bestimmungssignal (Sc) anzeigt, dass der Antriebsstrom ein Überstrom ist.

2. Elektrowerkzeug (10) nach Anspruch 1, **dadurch gekennzeichnet, dass** der Reduktionsschalter (17) konfiguriert ist, um die Antriebsstrom-Erzeugungseinheit (13, 15) in den Antriebsstrom-Unterbrechungszustand zu schalten, wenn das Bestimmungssignal (Sc) anzeigt, dass der Antriebsstrom ein Überstrom ist.

3. Elektrowerkzeug (10) nach Anspruch 1, **dadurch gekennzeichnet, dass**:
der Reduktionsschalter (17) konfiguriert ist, um die Antriebsstrom-Erzeugungseinheit (13, 15) in den reduzierten Antriebsstrom-Erzeugungszustand zu schalten, wenn das Bestimmungssignal (Sc) anzeigt, dass der Antriebsstrom ein Überstrom ist; und
der Reduktionsschalter (17) konfiguriert ist, um die Antriebsstrom-Erzeugungseinheit (13, 15) mindestens so lange in dem reduzierten Antriebsstrom-Erzeugungszustand zu halten, bis die Steuerschaltung (20) ein Steuersignal zum Umschalten der Antriebsstrom-Erzeugungseinheit (13, 15) in den Antriebsstrom-Unterbrechungszustand ausgibt.

4. Elektrowerkzeug (10) nach einem der vorhergehenden Ansprüche, **dadurch gekennzeichnet, dass**:
der Reduktionsschalter (17) in einer Bypassleitung angeordnet ist, die die Überstrom-Bestimmungseinheit (16) und die Antriebsstrom-Erzeugungseinheit (13, 15) verbindet, wobei die Steuerschaltung (20) von der Bypassleitung ausgeschlossen ist.

5. Elektrowerkzeug (10) nach einem der vorhergehenden Ansprüche, **dadurch gekennzeichnet, dass**:
der Reduktionsschalter (17) mit der Antriebsstrom-Erzeugungseinheit (13, 15) verwendet wird, die eine Vollbrücken-Antriebsschaltung (13) aufweist, die durch mehrere Schaltelemente (Q1 bis Q6) gebildet wird; und
der Reduktionsschalter (17) einem Schaltelement (Q1, Q2, Q3) für einen einzelnen Arm der Vollbrücken-Antriebsschaltung zugeordnet ist.

6. Elektrowerkzeug (10) nach einem der vorhergehenden Ansprüche, **dadurch gekennzeichnet, dass**:
die Steuerschaltung (20) einen Mikrocomputer (20) aufweist.

7. Elektrowerkzeug (10) nach Anspruch 1,
wobei die Überstrom-Bestimmungseinheit (16) mit dem Stromdetektor (Ra) verbunden ist, wobei die Steuerschaltung (20) konfiguriert ist, um ein Steuersignal für das Schalten zu erzeugen und das Steuersignal für die Antriebsstrom-Erzeugungseinheit (13, 15) vorzusehen, wobei der Reduktionsschalter (17) mit der Überstrom-Bestimmungseinheit (16) und der Antriebsstrom-Erzeugungseinheit (13, 15) verbunden ist, und wobei der Reduktionsschalter (17) konfiguriert ist, um die Antriebsstrom-Erzeugungseinheit (13, 15) direkt mit einem Schaltsignal (Sx) zu versorgen, wenn das Bestimmungssignal (Sc) anzeigt, dass der Antriebsstrom ein Überstrom ist, und das Schaltsignal (Sx) den Antriebsstrom, der durch die Antriebsstrom-Erzeugungseinheit (13, 15) erzeugt wird, reduziert.

## Revendications

1. Outil électrique (10), comprenant :
un moteur (M) servant de source d'entraînement (M1) ; et
un dispositif de protection contre les surintensités (11) pour protéger la source d'entraînement (M1) contre les surintensités, le dispositif de protection contre les surintensités (11) comprenant :
une unité de génération de courant d'entraînement (13, 15) qui est configurée pour générer un courant d'entraînement pour la source d'entraînement (M1) ;
un détecteur de courant (Ra) agencé pour détecter le courant d'entraînement pour la source d'entraînement (M1) ;
une unité de détermination de surintensité (16) qui est configurée pour déterminer si le courant d'entraînement détecté par le détecteur de courant (Ra) est ou non une surintensité et délivre un signal de détermination (Sc) conformément à la détermination ; et un circuit de commande (20) qui est configuré pour effectuer un calcul comprenant une commande pour commuter l'unité de génération de courant d'entraînement (13, 15) entre un état de génération de courant d'entraînement et un état de suspension de courant d'entraînement en fonction du signal de détermination (Sc) provenant de l'unité de détermination de surintensité (16), l'unité de génération de courant d'entraînement (13, 15) étant configurée pour générer le courant d'entraînement dans l'état de génération de courant d'entraînement, et l'unité de génération de courant d'entraînement (13, 15) étant configurée pour arrêter de générer le courant d'entraînement dans l'état de suspension de courant d'entraînement ;
**caractérisé en ce que** l'outil électrique comprend en outre :
un commutateur de réduction unique (17) qui est un transistor (Tr7), le transistor (tr7) comprenant une base, connectée à l'unité de détermination de surintensité (16) pour recevoir le signal de détermination (Sc), et un collecteur, connecté à l'unité de génération de courant d'entraînement (13, 15) pour délivrer en sortie un signal de commutation (Sx), et dans lequel le transistor (Tr7) est configuré pour recevoir le signal de détermination (Sc) de l'unité de détermination de surintensité (16) sans impliquer le circuit de commande (20) et pour commuter directement l'unité de génération de courant d'entraînement (13, 15) vers un état de génération de courant d'entraînement réduit lorsque le signal de détermination (Sc) indique que le courant d'entraînement est une surintensité.

2. Outil électrique (10) selon la revendication 1, **caractérisé en ce que** le commutateur de réduction (17) est configuré pour commuter l'unité de génération de courant d'entraînement (13, 15) vers l'état de suspension de courant d'entraînement lorsque le signal de détermination (Sc) indique que le courant d'entraînement est une surintensité.

3. Outil électrique selon la revendication 1, **caractérisé en ce que** :
le commutateur de réduction (17) est configuré pour commuter l'unité de génération de courant d'entraînement (13, 15) vers l'état de génération de courant d'entraînement réduit lorsque le signal de détermination (Sc) indique que le courant d'entraînement est une surintensité ; et
le commutateur de réduction (17) est configuré pour maintenir l'unité de génération de courant d'entraînement (13, 15) dans l'état de génération de courant d'entraînement réduit au moins jusqu'à ce que le circuit de commande (20) émette un signal de commande pour commuter l'unité de génération de courant d'entraînement (13, 15) vers l'état de suspension de courant d'entraînement.

4. Outil électrique (10) selon l'une quelconque des revendications précédentes, **caractérisé en ce que** :
le commutateur de réduction (17) est disposé dans une ligne de dérivation qui relie l'unité de détermination de surintensité (16) et l'unité de génération de courant d'entraînement (13, 15), le circuit de commande (20) étant exclu de la ligne de dérivation.

5. Outil électrique (10) selon l'une quelconque des revendications précédentes, **caractérisé en ce que** :
le commutateur de réduction (17) est utilisé avec l'unité de génération de courant d'entraînement (13, 15) qui comprend un circuit d'entraînement en pont complet (13) formé par une pluralité d'éléments de commutation (Q1 à Q6) ; et
le commutateur de réduction (17) est associé à un élément de commutation (Q1, Q2, Q3) pour un seul bras du circuit de commande en pont complet.

6. Outil électrique (10) selon l'une quelconque des revendications précédentes, **caractérisé en ce que** :
le circuit de commande (20) comprend un micro-ordinateur (20).

7. Outil électrique (10) selon la revendication 1,
dans lequel l'unité de détermination de surintensité (16) est connectée au détecteur de courant (Ra), dans lequel le circuit de commande (20) est configuré pour générer un signal de commande pour la commutation et pour fournir le signal de commande à l'unité de génération de courant d'entraînement (13, 15), dans lequel le commutateur de réduction (17) est connecté à l'unité de détermination de surintensité (16) et à l'unité de génération de courant d'entraînement (13, 15), et dans lequel le commutateur de réduction (17) est configuré pour fournir directement à l'unité de génération de courant d'entraînement (13, 15) un signal de commutation (Sx) lorsque le signal de détermination (Sc) indique que le courant d'entraînement est une surintensité, et le signal de commutation (Sx) réduit le courant d'entraînement qui est généré par l'unité de génération de courant d'entraînement (13, 15).
